(19) Europäisches Patentamt
European Patent Office
Office européen des brevets

(11) EP 4 176 367 B1

(12) EUROPEAN PATENT SPECIFICATION

(45) Date of publication and mention
of the grant of the patent:
**10.12.2025 Bulletin 2025/50**

(51) International Patent Classification (IPC):
**G06F 21/64** (2013.01)    **G06Q 20/02** (2012.01)
**G06Q 20/38** (2012.01)    **H04L 9/40** (2022.01)

(21) Application number: **21759306.0**

(22) Date of filing: **16.08.2021**

(52) Cooperative Patent Classification (CPC):
**G06F 21/64; G06Q 20/02; G06Q 20/38215;
G06Q 20/3829; H04L 63/0428; H04L 63/0823;**
G06Q 2220/00; H04L 63/166

(86) International application number:
**PCT/EP2021/072678**

(87) International publication number:
**WO 2022/058103 (24.03.2022 Gazette 2022/12)**

(54) **QUIC TRANSACTIONS**

QUIC-TRANSAKTIONEN

TRANSACTIONS QUIC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.09.2020 GB 202014471**

(43) Date of publication of application:
**10.05.2023 Bulletin 2023/19**

(60) Divisional application:
**25213009.1**

(73) Proprietor: **nChain Licensing AG**
**6300 Zug (CH)**

(72) Inventors:
• **PAGANI, Alessio**
**London W1W 8AP (GB)**
• **KRISTENSEN, Brad**
**London W1W 8AP (GB)**

(74) Representative: **Page White Farrer**
**Bedford House**
**21a John Street**
**London WC1N 2BF (GB)**

(56) References cited:
**US-A1- 2019 311 337    US-A1- 2020 151 716**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to a method of using the QUIC network protocol to send and receive blockchain transactions.

BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in more detail later. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

US 2019/0311337 A1 discloses a blockchain value transfer method. The method involves receiving a value transfer request for cryptocurrency or tokens, determining if it's intra-chain or inter-chain, sending a raw transaction to the client, obtaining a user-signed transaction, verifying the signature, and broadcasting it to the appropriate networks based on the transfer type.

US 2020/151716 A1 discloses a blockchain value transfer method. The method involves receiving multiple transaction requests, performing balance checks, determining net transactions for each user account in an aggregate record, executing net transactions by withdrawing in-network tokens, exchanging them for tethered tokens, transferring between networks, exchanging back to in-network tokens, depositing them in receiving accounts, and crediting remaining tokens to accounts on the initial network.

SUMMARY

The Bitcoin blockchain was originally designed to provide an electronic cash system that allows direct exchanging of value e.g. between users and between users and machines.

However, direct exchange of unpublished transactions (i.e. transactions that have not yet been broadcast to the network for validation) was soon removed due to its vulnerability to man-in-the-middle attacks. Nowadays, the direct exchange of transactions (i.e. user-to-user, user-to-machine, machine-to-machine) is being reintroduced.

The need for fast and secure communication is paramount when sending and receiving unpublished transactions between two parties. Secure communication is essential in order to prevent man-in-the-middle attacks and other similar attacks. Fast communication is essential from a performance point of view, and is particularly important when two parties are exchanging many unpublished transactions, e.g. for content streaming, contract negotiations, etc.

According to one aspect disclosed herein, there is provided a computer-implemented method of sharing blockchain transactions, wherein the method is performed by a first party and comprises: receiving, from a second party over a QUIC connection, an incoming QUIC handshake message, wherein the incoming QUIC handshake message comprises a payment destination, wherein the payment destination comprises a public key and/or a public-key-based address; and sending a transaction to the second party over the QUIC connection, wherein the transaction comprises an output locked to the payment destination.

According to another aspect disclosed herein, there is provided a computer-implemented method of sharing blockchain transactions, wherein the method is performed by a second party and comprises: sending to a first party over a QUIC connection, an outgoing QUIC handshake message, wherein the outgoing QUIC handshake message comprises a payment destination; receiving a transaction from the first party over a QUIC connection, wherein the transaction comprises the payment destination, wherein the payment destination comprises a public key and/or a public-key-based address; and sending the transaction to one or more blockchain nodes of a blockchain network.

The present invention uses the QUIC network protocol to send and receive blockchain transactions between first and second parties, e.g. between users. The first party acts as a sending party and the second party acts as a receiving party. The sending party sends a transaction to the receiving party. The receiving party then submits the received transaction to the blockchain network. The transaction is an unpublished transaction, wherein an unpublished transaction is defined to be a transaction that has not yet been validated by a blockchain node, and hence has not yet been incorporated in a block of the blockchain.

QUIC (Quick UDP Internet Connections) is an alternative to TCP/IP. QUIC allows fast handshakes, secure and authenticated sessions and it supports network switches (e.g. Wi-Fi to 4G). Transactions sent between the first and second parties using QUIC are referred to herein as QUIC transactions. They support all the features of QUIC and provide a secure way to exchange unpublished transactions between users and/or machines (unpublished transactions are then submitted to the network, e.g. when it is most convenient to a user). Moreover, some embodiments of the present invention involve the use of "QUIC Channels", which are fast and encrypted payment channels based on QUIC and QUIC streams.

The many advantages of using QUIC to share unpublished transactions are discussed in detail below.

BRIEF DESCRIPTION OF THE DRAWINGS

To assist understanding of embodiments of the present disclosure and to show how such embodiments may be put into effect, reference is made, by way of example only, to the accompanying drawings in which:

Figure 1 is a schematic block diagram of a system for implementing a blockchain,

Figure 2 schematically illustrates some examples of transactions which may be recorded in a blockchain,

Figure 3A is a schematic block diagram of a client application,

Figure 3B is a schematic mock-up of an example user interface that may be presented by the client application of Figure 3A,

Figure 4 schematically illustrates a comparison between a TCP+TLS handshake and a QUIC handshake,

Figure 5 schematically illustrates an example system for sharing unpublished transaction using QUIC,

Figure 6 schematically illustrates an example sequence diagram for sharing unpublished transactions using QUIC,

Figure 7 schematically illustrates another example sequence diagram for sharing unpublished transactions using QUIC,

Figure 8 schematically illustrates another example sequence diagram for sharing unpublished transactions using QUIC, and

Figure 9 schematically illustrates an example sequence diagram for implementing a payment channel using QUIC.

DETAILED DESCRIPTION OF EMBODIMENTS

EXAMPLE SYSTEM OVERVIEW

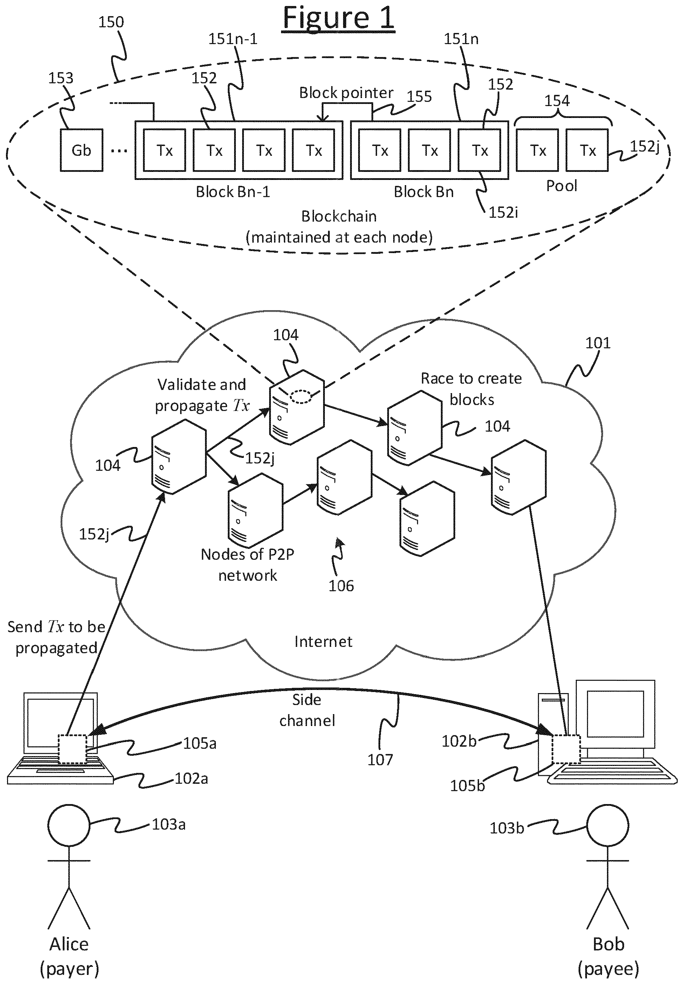

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 comprises at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also comprises a block pointer 155 pointing back to the previously created block 151 in the chain so as to define a sequential order to the blocks 151. Each transaction 152 (other than a coinbase transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when a party 103, such as an individual user or an organization, wishes to enact a new transaction 152j (either manually or by an automated process employed by the party), then the enacting party sends the new transaction from its computer terminal 102 to a recipient. The enacting party or the recipient will eventually send this transaction to one or more of the blockchain nodes 104 of the network 106 (which nowadays are typically servers or data centres, but could in principle be other user terminals). It is also not excluded that the party 103 enacting the new transaction 152j could send the transaction directly to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may comprise checking that the cryptographic signature or other authorisation of the party 103 included in the input of the new transaction 152j matches a condition defined in the output of the preceding transaction 152i which the new transaction assigns, wherein this condition typically comprises at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned (e.g. spent) is whether it has yet been validly redeemed by the input of another, onward transaction 152j according to the blockchain node protocol. Another condition for a transaction to be valid is that the output of the preceding transaction 152i which it attempts to redeem has not already been redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered pool 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this comprises searching for a "nonce" value such that when the nonce is concatenated with a representation of the ordered pool of pending transactions 154 and hashed, then the output of the hash meets a predetermined condition. E.g. the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. The significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the pool of yet-to-be published transactions 154 at any given time, depending on when they started searching for a solution or the order in which the transactions were received. Whoever solves their respective puzzle first defines which transactions 152 are included in the next new block 151n and in which order, and the current pool 154 of unpublished transactions is updated. The blockchain nodes 104 then continue to race to create a block from the newly-defined ordered pool of unpublished transactions 154, and so forth. A protocol also exists for resolving any "fork" that may arise, which is where two blockchain nodes104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to newly assign an additional, accepted amount of the digital asset in a new special kind of transaction which distributes an additional defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction" or "generation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 104. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152.

Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered pool of pending transactions 154 maintained at a given blockchain node 104, that blockchain node 104 will start competing to solve the proof-of-work puzzle on the latest version of their respective pool of 154 including the new transaction 152 (recall that other blockchain nodes 104 may be trying to solve the puzzle based on a different pool of transactions154, but whoever gets there first will define the set of transactions that are included in the latest block 151. Eventually a blockchain node 104 will solve the puzzle for a part of the ordered pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

## UTXO-BASED MODEL

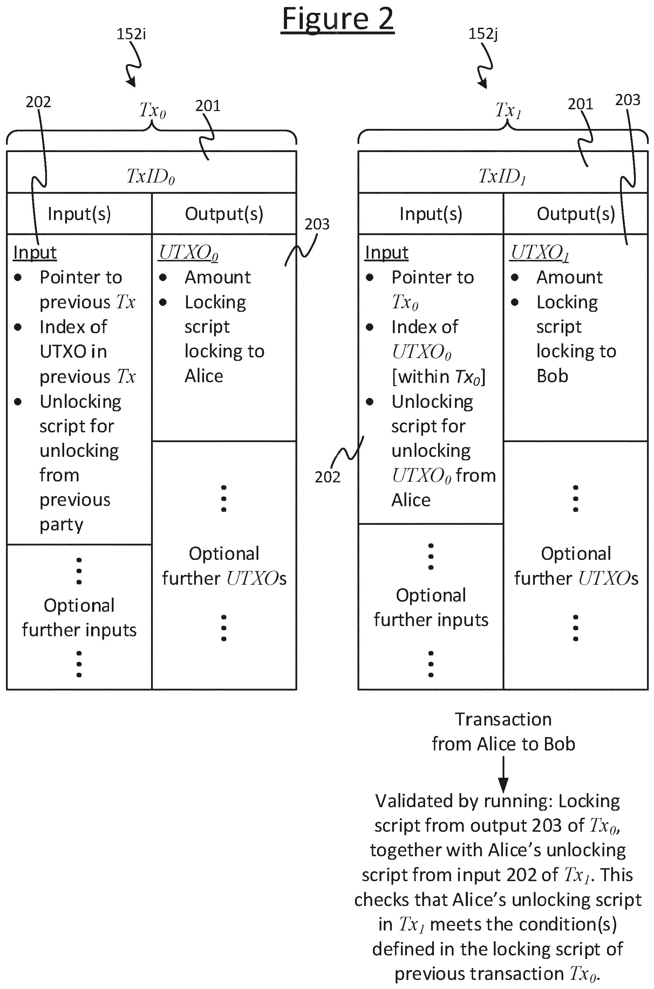

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled " $Tx_1$ ". It takes an amount of the digital asset that is locked to Alice in the output 203 of a preceding transaction 152i in the sequence, and transfers at least some of this to Bob. The preceding transaction 152i is labelled "$Tx_0$' in Figure 2. $Tx_0$ and $Tx_1$ are just arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in a block 151 of the blockchain 150 at the time when Alice creates her new transaction $Tx_1$, or at least by the time she sends it to the network 106. It may already have been included in one of the blocks 151 at that time, or it may be still waiting in the ordered set 154 in which case it will soon be included in a new block 151. Alternatively $Tx_0$ and $Tx_1$ could be created and sent to the network 106 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction $Tx_0$ comprises a particular UTXO, labelled here $UTXO_0$. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of Txocomprises a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains a representation (i.e. a hash) of the public key $P_A$ from a public-private key pair of Alice. The input 202 of $Tx_1$ comprises a pointer pointing back to $Tx_1$ (e.g. by means of its transaction ID, $TxID_0$, which in embodiments is the hash of the whole transaction $Tx_0$). The input 202 of $Tx_1$ comprises an index identifying $UTXO_0$ within $Tx_0$, to identify it amongst any other possible outputs of $Tx_0$. The input 202 of $Tx_1$ further comprises an unlocking script <Sig $P_A$> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This comprises running the locking script and unlocking script together to check whether the unlocking script meets the condition defined in the locking script (where this condition may comprise one or more criteria). In embodiments this involves concatenating the two scripts:

<Sig $P_A$> <$P_A$> || [Checksig $P_A$]

where "||" represents a concatenation and "<...>" means place the data on the stack, and "[...]" is a function comprised by the locking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0$, to authenticate that the unlocking script in the input of $Tx_1$ contains the signature of Alice signing the expected portion of data. The expected portion of data itself (the "message") also needs to be included in order to perform this authentication. In embodiments the signed data comprises the whole of $Tx_1$ (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically comprises hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in $Tx_1$ meets the one or more conditions specified in the locking script of $Tx_0$ (so in the example shown, if Alice's signature is provided in $Tx_1$ and authenticated), then the blockchain node 104 deems $Tx_1$ valid.

This means that the blockchain node 104 will add $Tx_1$ to the ordered pool of pending transactions 154. The blockchain node 104 will also forward the transaction $Tx_1$ to one or more other blockchain nodes 104 in the network 106, so that it will be propagated throughout the network 106. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the blockchain node 104 also needs to check whether the referenced UTXO in the preceding transaction $Tx_0$ is already spent (i.e. whether it has already formed a valid input to another valid transaction). This is one reason why it is important for the blockchain 150 to impose a defined order on the transactions 152. In practice a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the bitcoin node 104 that successfully includes her transaction 104 in a block 151. If Alice does not include such a fee, $Tx_0$ may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. E.g. say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference may be assigned by the node 104 that wins the proof-of-work race to create the block containing $UTXO_1$. Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

SIDE CHANNEL

As shown in Figure 1, the client application on each of Alice and Bob's computer equipment 102a, 120b, respectively, may comprise additional communication functionality. This additional functionality enables Alice 103a to establish a separate side channel 107 with Bob 103b (at the instigation of either party or a third party). The side channel 107 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 107 may be used to exchange any other transaction related data, such as keys, negotiated amounts or terms, data content, etc.

The side channel 107 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 107 as referred to anywhere herein may comprise any one or more links via one or more networking technologies or communication media for exchanging data "off-chain", i.e. separately from the blockchain network 106. Where more than one link is used, then the bundle or collection of off-chain links as a whole may be referred to as the side channel 107. Note therefore that if it is said that Alice and Bob exchange certain pieces of information or data, or such like, over the side channel 107, then this does not necessarily imply all these pieces of data have to be send over exactly the same link or even the same type of network.

CLIENT SOFTWARE

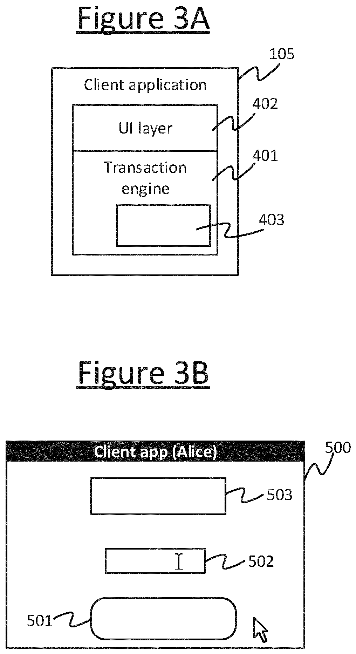

Figure 3A illustrates an example implementation of the client application 105 for implementing embodiments of the presently disclosed scheme. The client application 105 comprises a transaction engine 401 and a user interface (UI) layer 402. The transaction engine 401 is configured to implement the underlying transaction-related functionality of the client 105, such as to formulate transactions 152, receive and/or send transactions and/or other data over the side channel 301, and/or send transactions to one or more nodes 104 to be propagated through the blockchain network 106, in accordance with the schemes discussed above and as discussed in further detail shortly

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could comprise one or more display screens (touch or non-touch screen) for providing a visual output, one or more speakers for providing an audio output, and/or one or more haptic output devices for providing a tactile output, etc. The user input means could comprise for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note: whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (UI) 500 which may be rendered by the UI layer 402 of the client application 105a on Alice's equipment 102a. It will be appreciated that a similar UI may be rendered by the client 105b on Bob's equipment 102b, or that of any other party.

By way of illustration Figure 3B shows the UI 500 from Alice's perspective. The UI 500 may comprise one or more UI elements 501, 502, 502 rendered as distinct UI elements via the user output means.

For example, the UI elements may comprise one or more user-selectable elements 501 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands).

Alternatively or additionally, the UI elements may comprise one or more data entry fields 502. These data entry fields are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may comprise one or more information elements 503 output to output information to the user. E.g. this/these could be rendered on screen or audibly.

It will be appreciated that the particular means of rendering the various UI elements, selecting the options and entering data is not material. The functionality of these UI elements will be discussed in more detail shortly. It will also be appreciated that the UI 500 shown in Figure 3 is only a schematized mock-up and in practice it may comprise one or more further UI elements, which for conciseness are not illustrated.

NETWORK PROTOCOLS

This section briefly discusses some concepts and techniques used in the remainder of the description, when the main embodiments of the invention are described. IP-to-IP transactions and their possible implementation using IPv4 and IPv6 protocols are first discussed. Then follows a discussion of how payment channel works and, finally, the QUIC protocol is introduced.

A discussion of QUIC is also provided, in particular its usage to improve IP-to-IP transactions to exchange fast, secure and private unpublished transactions and to create payment channels.

**IP-to-IP Transactions**

Bitcoin was designed with IP-to-IP transactions built-in: a client willing to send a transaction can contact the recipient's IP address, retrieve its bitcoin address and directly send the transactions to the recipient. However, the initial implementation was removed in 2011 due to its vulnerability to man-in-the-middle (MITM) attacks.

The reintroduction of IP-to-IP transactions has been proposed. Certificates can be used to ensure the identity of the hosts and verify the authenticity of the bitcoin addresses associated with an IP address. This technique can be used with both IPv4 and IPv6. On one hand, the IPv4 solution uses zone keys to derive certified public keys, relying on Domain Name System Security Extension (DNSSEC) and Secure Socket Layer (SSL) certificates to prevent MITM attacks. On the other hand, IPv6 natively allows one to create end-to-end authentication using IPsec and securely exchange bitcoin addresses. Alternatively, when a recipient is not online, cryptographically generated addresses (CGA) (already used to generate IPv6 addresses) can be used to generate bitcoin addresses and send transactions without need of real-time interaction between the clients.

**Payment Channels**

A payment channel is a class of techniques designed to make multiple user-to-user Bitcoin transactions without registering all the transactions to the blockchain. In a typical payment channel, only two transactions are published to the blockchain, but a nearly unlimited number of payments can be made between the participants. Payment channels are used to allow participants to communicate and exchange information quickly and without paying transaction fees.

Payment channels exchange transactions using the sequence number field to indicate if they are finalized or not. A transaction is finalized if the sequence number is the maximum value (0xFFFFFFFF), if the transaction has a lower value it can be updated incrementing its sequence number and resubmitting it (only the one with the highest sequence number is valid). A transaction can be spent when it is finalized or when the set locktime has elapsed. A payment channel is opened using *a funding transaction* (also called an *initial transaction*) and the corresponding *refunding transaction* (which returns the initial funds to the participants after locktime matures). All the subsequent communications occur via bitcoin transactions, following the rules specified by the payment channel. A user can update a transaction (and its sequence number), sign it and send it to the other participant. If the receiver is happy, it signs the transaction as well and sends it back. This creates a checkpoint for the payment channel (last agreed transaction). If the receiver is not happy with the new transaction it can update the transaction and send it back or it can reject it, wait the locktime and recover the funds as agreed in the last valid checkpoint (or the refunding transaction if there are not checkpoints) after locktime.

Payment channel use cases include micropayments for content streaming, commercial agreements involving frequent payments and many more.

**QUIC**

QUIC is a network protocol widely used to improve performance of connection-oriented applications, which are all the applications that require to establish an end-to-end connection between the devices before transmitting data (e.g., web browsing, video streaming, file transfer, remote login). QUIC does not rely on TCP, instead it establishes multiplexed connections between two clients using the UDP protocol.

Advantages of QUIC:

- QUIC exchanges setup keys in the initial handshake process: all the data needed for encryption are exchanged immediately, eliminating the need to setup TCP connections and then negotiate security protocol using additional packets (e.g., SSL).
- QUIC handles packet loss: data flows are controlled independently at QUIC level (UDP does not include loss recovery), this means that the protocol stack can serve streams independently and an error in one stream does not block the others (like it happens in TCP).
- QUIC encrypts packets individually: there are never encrypted data waiting for partial packets.
- QUIC handles network-switch events: it includes a connection identifier (Connection ID) which uniquely identifies the connection to the server regardless of the source. If a connection drops, it can be re-established by sending a packet with the same connection ID as the original connection ID, even if the sender's IP address changes. This is particularly useful for mobile devices that can switch form WIFI to mobile networks using the same network session (TCP must time out the old session and create a new one).
- QUIC is implemented in application space: it does not require any changes to the kernel, it can be easily adopted by all the clients already supporting UDP. This led to a rapid adoption of this protocol worldwide, compared to other network technologies whose adoption is very slow (e.g. IPv6).
- QUIC supports fallback-to-TCP: QUIC and TCP connection can be opened at the same time, allowing to fallback with zero latency for systems that do not support QUIC.

**Connection ID**

The connection ID is used to uniquely identify a logical connection between two processes before data is exchanged (e.g. a communication channel between a client and a server to request and receive a web page). Each peer selects a connection ID that is exchanged with the other peer during the QUIC handshake. Connection IDs are independently created by the endpoints and should ideally not contain any information that could be used to correlate a connection with another (so each new connection should preferably create a new, independently created, connection ID).

The connection ID ensures that any change in the lower protocol layers do not cause any disruption to the QUIC connection. Packets with long headers include source connection ID and destination connection ID, while packets with short headers only include the destination connection ID. The source connection ID is used by the other peer to set the destination connection ID.

**TCP+TLS/SSL vs QUIC**

TCP provides a reliable, ordered and error-checked delivery of streams of bytes between applications. It is connection-oriented, and a connection between the systems must be established before data can be transmitted. The connection is initialized using a three-way handshake. On top of TCP runs the TLS/SSL cryptographic protocol, used to provide communication security, guaranteeing privacy and data integrity (the connection at this point is private, authenticated and reliable). However, TLS/SSL requires another connection to be established and another handshake, increasing the latency.

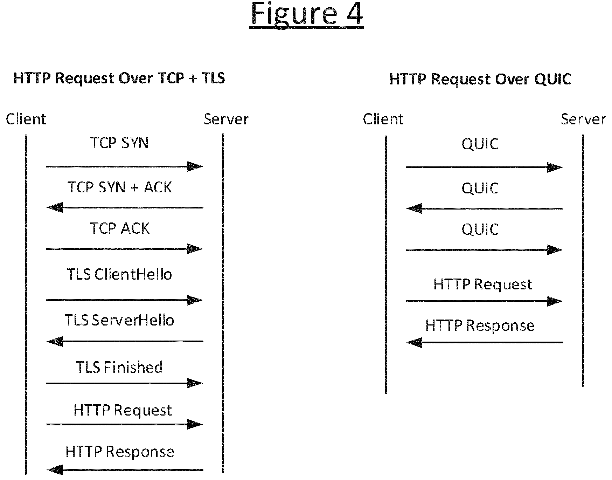

QUIC provides all these features from the transport protocol itself, the initial QUIC handshake combines the three-way handshake with the TLS handshake, making the initial connection establishment authenticated, encrypted and faster. The QUIC handshake only takes a single round-trip between client and server to complete, compared to the two round-trip required by the TCP+TLS/SSL (see a comparison in Figure 4).

QUIC uses the same principles of TLS, using symmetric cryptography to encrypt data, with the shared secret negotiated during the QUIC handshake (like in the TLS handshake). Moreover, it provides other advantages like the encryption of additional connection metadata that could be abused by middle-boxes to interfere with connections. This ensures that it is impossible to correlate any activity between entities.

QUIC TRANSACTIONS

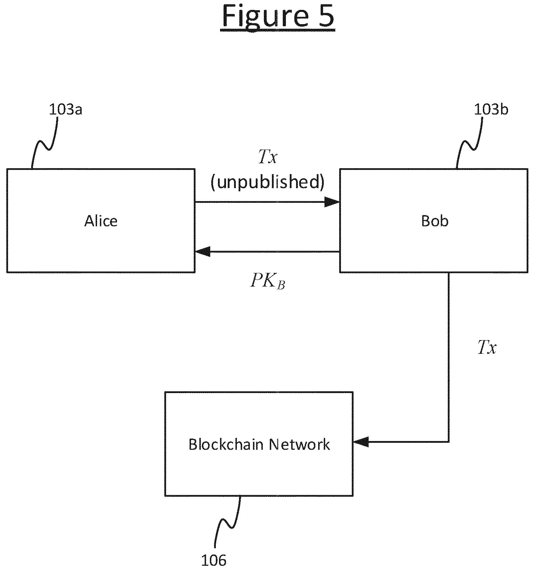

Embodiments of the present invention use the QUIC network protocol to share unpublished blockchain transactions between two parties. Figure 5 illustrates an example system 500 for implementing some embodiments of the present invention. The system 500 includes a first party (Alice) 103a and a second party (Bob) 103b. The system 500 also includes one or more blockchain nodes 104 of the blockchain network 106. Whilst the first and second parties are labelled Alice 103a and Bob 103b respectively, the first and second parties may each be configured to perform some or all of any of the functions attributed as being performed by Alice 103a and Bob 130b with reference to Figures 1 to 3. Note also that in general either or both of the first and second parties may be autonomous machines, i.e. machines that are not operated by users.

In the context of the present invention, Alice 103a acts as a sender and Bob 103b acts as a receiver. That is, Alice sends an unpublished transaction to Bob 103, and hence Bob 103b receives an unpublished transaction. Bob 103b then submits the unpublished transaction to the blockchain network 106. The unpublished transaction will then be published in a block 151 of the blockchain 150. Note that in some examples Bob 103b may also send an unpublished transaction to Alice 103a, which may then be submitted to the blockchain network 106 by Alice 103a.

In general, Bob 103b sends a public key or a public key based address (e.g. a hash of a public key) to Alice 103a over a QUIC connection. Alice 103a receives the public key or public key based address from Bob 103b over the QUIC connection. Alice 103a then sends an unpublished transaction to Bob 103b over the QUIC connection, which is received by Bob 103b. After receiving the unpublished transaction from Alice 103a, Bob 103b transmits the unpublished transaction to one or more blockchain nodes 104 to be recorded on the blockchain 150.

For brevity, the public key or the public key based address will be referred to below as a payment destination. Bob 103b may send either or both of the public key or the public key based address to Alice 103a, depending on the particular use case. Note that the term "payment destination" does not necessarily mean that the Alice 103a is paying Bob 103b for something, e.g. goods or services. Rather the payment destination is a destination to which an amount of digital asset (i.e. the native token of the blockchain) is to be assigned. The payment destination may form part of a locking script (e.g. for UTXO-style blockchains).

Preferably the public key that forms the payment destination, or on which the payment destination is based, is owned by Bob 103b. However it is not excluded that Bob 103b may provide Alice 103a with a public key owned by another user or other type of entity. The payment destination may be linked to a certified public key, i.e. a public key certified as belonging to a particular user. For instance, the payment destination may be the certified public key, or the payment destination may be a hash of the certified public key. In other examples, the payment destination may be (or be a hash of) a public key deterministically derived from the certified public key.

Note that it is also not excluded that Alice 103a obtains the payment destination using an alternative method, i.e. not over the QUIC connection. For example, Alice 103a may already have access to Bob's public key, or Bob 103b may send the payment destination to Alice 103a over a different connection.

In general there are three phases of a QUIC connection: a handshake phase, an open connection phase, and a closed connection phase. As described above, the handshake phase is used to exchange connection identifiers (IDs). Each message sent over QUIC comprises a source connection ID and a destination ID. Each party has a respective source connection ID, which is used by the other party as the destination ID in their outgoing messages. For instance, when Alice 103a sends a message to Bob 103b, Alice's message includes a source connection ID set by Alice 103a and a destination ID set by Bob 103b. An exception is the initial handshake message, where the destination ID may initially be set as arbitrary data. Bob's message then includes a source connection ID set by Bob 103b. The destination connection ID of Bob's message corresponds to Alice's source connection ID. The skilled person will be familiar with QUIC handshakes. The open connection phase may involve one or more messages send back and forth between Alice 103 and Bob 103b, where the source connection ID and destination connection ID are those established during the handshake phase. The closed connection phase is then caused by the QUIC channel being closed.

Bob 103b may send the payment destination to Alice 103a during the QUIC handshake phase, i.e. as part of an outgoing QUIC handshake message. Bob's outgoing handshake message may be the initial QUIC handshake message. Alternatively, Alice 103a may send the initial QUIC handshake message to which Bob 103b responds. For instance, Alice 103a may send a QUIC handshake message to Bob 103b which includes a request for the payment destination.

If Bob's outgoing QUIC handshake message is the initial handshake message, Bob 103b sets the source connection ID using data specific to him. For instance, the source connection ID may contain a public key linked to Bob 103b (which may or may not be the same as the public key upon which the payment destination is based). The source connection may contain additional or alternative data, e.g. some other type of identifier. More details are given below. Since this is the initial handshake message, the destination connection ID can be set as any arbitrary data.

If Bob's outgoing QUIC handshake is a response to an initial incoming QUIC handshake message from Alice 103a, Alice's QUIC handshake message will include a source connection ID. Bob 103b uses Alice's source connection ID as the destination connection ID in his outgoing QUIC handshake message. For instance, Alice 103a may use her public key or a different type of identifier as her source connection ID.

In general QUIC messages, including the QUIC handshake messages, comprise a source connection ID field, a destination connection ID field, and a payload field. In some embodiments, the payment destination may be included in the payload field of Bob's QUIC handshake message.

Optionally, the payload field may include a transaction template. A transaction template is an unpublished blockchain transaction that includes data in one or more inputs and/or one or more outputs of the transaction. For instance, Bob 103b may include data in an unspendable output of the transaction template, e.g. an OP_FALSE OP_RETURN output. In some examples, the transaction template may comprise the payment destination. The payment destination may be included as part of a locking script. That is, Bob 103b may include a locking script that is locked to (i.e. directed at) the payment destination. For example, the locking script may include a pay-to-public-key-hash (P2PKH) script that is locked to a public key hash.

As mentioned above, Bob's handshake message may be sent in response to an incoming handshake message from Alice 103. In that case, Alice 103a may include the payment request in the source connection ID field and/or the payload field of her outgoing QUIC handshake message. The payment request may include a request for a payment destination and/or a transaction template.

Having obtained the payment destination (e.g. included as part of the transaction template), Alice 103a generates a transaction which includes the payment destination (e.g. an output locked to the payment destination) and sends the transaction to Bob 103b over the QUIC connection. The transaction is included in a payload field of a QUIC message. The QUIC message includes the source connection ID and destination connection ID established during the handshake phase. Bob 103b may optionally respond with an acknowledgement message.

After Bob 103b has received the transaction he submits it to the blockchain network 106.

In some embodiments, rather than the unpublished transaction being sent to Bob 103b after the handshake phase, Alice 103a may send the transaction to Bob 103 during the handshake phase. That is, Alice 103a may include the transaction in an outgoing QUIC handshake message to Bob 103b. The transaction may be included in the source connection ID field and/or the payload field of the handshake message.

Alice's handshake message may be the initial handshake message. Alternatively, Bob 103b may send the initial handshake message to Alice 103a. For example, the payment destination may be included in the source connection ID field of Bob's QUIC handshake message. In some examples, Bob 103b may include the transaction template in the source connection ID field. The transaction template may comprise the payment destination.

In some embodiments, Alice 103a and Bob 103b may use the QUIC connection to set up a payment channel. A payment channel is used to send multiple unpublished transactions between two parties, where only one of the unpublished transactions is submitted to the blockchain network 106. An initial transaction is sent from Alice 103a to Bob 103b as described above. Bob 103b submits the initial transaction to the blockchain network 106. Alternatively, Alice 103a may be the one to submit the initial transaction to the network 106. Then, Alice 103a sends Bob 103b one or more updated versions of the initial transaction. For instance, the amount of the native token locked to Bob 103b may change (e.g. increase) with each updated version of the initial transaction. Each updated version is sent as part of a respective QUIC message, e.g. included in the payload field. When the QUIC connection is closed by Alice 103a or Bob 103b, Bob 103b submits one of the updated versions (e.g. the most recent version) of the initial transaction to the blockchain network 106. It is also not excluded that Alice 103a may send one of the updated versions to the blockchain network 106. It is preferred that either party can close the channel, otherwise the other party may cheat and transmit an older, more favourable transaction to the network 106. If a party tries to cheat and transmit to the blockchain an older updated version, the other party can transmit the latest updated version. The nodes 104 will accept the transaction with the higher sequence number of the last agreed upon updated version.

In some examples, Alice 103a may send a respective one of the updated versions of the initial transaction in response to receiving a respective request message from Bob 103b. That is, Bob 103b may send a QUIC message which includes a request to Alice 103a, and in response Alice 103a sends an updated version of the initial transaction to Bob 103b. Alice 103a and Bob 130b may go through many iterations of this process before a final transaction is sent to the network 106.

In some examples, Bob 103b may stream data to Alice 103a in response to receiving each of the updated versions of the initial transaction. For example, the data may be media content, e.g. images, video, documents, etc., and Bob 103b may send portions of the media content to Alice 103a in response to each updated version. As a particular example, Bob 130b may send one minute portions of a video to Alice 103a upon receiving each updated version.

Further details about exemplary embodiments of the present invention are provided below. Note that at least some of the features described below are optional. In particular, the following examples are described with reference to the bitcoin blockchain, but it should be appreciated that they apply equally to other types of blockchain.

The present invention enables fast and secure, direct transfer of bitcoin (or other types of tokens, or data more generally) using the QUIC protocol. QUIC, in fact, improves performances of web applications in terms of speed (only one handshake is required, multiplexed connection can be used) and improved stability (supporting network switches). Moreover, previous approaches suffer from some limitations: on one hand, IP-to-IP transactions using IPv4 require that the receiver possesses a certificate released by a Certificate Authority. This is not a severe problem for businesses, but it is a limitation for private users willing to receive an IP-to-IP transaction. On the other hand, IP-to-IP using IPv6 solves this problem using IPsec and CGA to generate new bitcoin addresses. However IPv6 is not still widely supported.

As already discussed above, the QUIC protocol is designed to be a secure-by-default transport protocol. It provides authentication and encryption, also making the initial connection handshake faster. QUIC is also easy to integrate in current systems, and this has granted a quick and wide diffusion of the protocol (unlike IPv6). QUIC, in fact, is built in application space. It uses UDP as a substrate to avoid requiring changes to legacy client operating systems making it easy to be implemented in existing machines.

QUIC uses a connection ID to identify connections even if the network changes. As it is chosen independently by each peer, this field can be used to exchange bitcoin public keys and incorporate any other information to be used to receive or send payments. This prevents MITM attacks and, as it does not change in case of network-switch events, it facilitates the creation of reliable, fast and encrypted payment channels.

## Authentication

Before sending a bitcoin payment, the identity of the receiver (and optionally of the sender) is preferably verified using authentication protocols. The authentication protocol depends on the fact that a host either owns or does not own a trusted certificate. This section analyses both scenarios.

## Authentication using a Trusted Certificate

When the receiver (and optionally the sender) of a bitcoin transaction has a certificate issued by a certificate authority (CA), it can transmit it to the other host to prove its identity (like SSL/RLS). Alternatively, DNSSEC authentication can be used: the DNSSEC is a suite of the Internet Engineering Task Force (IETF) specifications that secures DNS records and information using certificate authorities (CAs) and a Public Key Infrastructure (PKI). Finally, authentication can also be guaranteed using a CA on-chain. CAs on-chain can format, issue, and revoke digital certificates that link a person's identity to a certified public key. Moreover, CAs on-chain can build public key infrastructures (PKIs) on-chain using links in transactions to create a chain of trust. This method facilitates KYC identity management on the bitcoin network.

We estimate that the majority of the QUIC transactions (i.e. transaction shared using the described techniques) will be to online shops or to remotely accessed machines that use trusted certificates issued by CAs, for this reason the authentication using trusted certificate will be the major use case.

## Self-Certification

In the cases where the receiver does not have a trusted certificate, it can use self-certifying addresses such as cryptographically generated address (CGA) or Host Identity Protocol (HIP) to self-certify the public key (and thus the derived bitcoin addresses) without need for a CA or PKI. Self-Certifying Addresses allows hosts to prove that they have the address they claim to have without relying on a trusted authority. These addresses are generated using the underlying public key cryptography: in very basic form, the name or the address of the object is the public-key that corresponds to that object which makes it easy to generate and verify the addresses, as the public-keys are assumed to be unique for each host. The public key of a bitcoin address can be cryptographically linked to a public-private keypair, so anyone who verifies the correct generation of the Self-Certifying Address can be guaranteed to a certain degree of security that the link is valid. The generation of self-certifying addresses is required because the address used as ID in a QUIC transaction must be renewed for every new connection.

Authentication can be done easily as a feature of the way CGAs work: it can be extended easily to derive a session key (through Diffie-Hellman or RSA) to provide confidentiality in a secure channel between sender and receiver, similar to how TLS works. There is no need for traditional PKI and internet key exchange when using CGA as that was the whole purpose of creating CGA. End-to end authentication and encryption can be done using IPsec, the IPsec suite consists of three main protocols: Security Associations (SA), Authentication Headers (AH), and Encapsulating Security Payloads (ESP). The SA protocol is used to provide the bundle of algorithms and data exchanges necessary for AH and/or ESP protocols. AH is used to guarantee authentication and integrity of the data sent. ESP is used to provide what AH provides in addition to confidentiality of the data.

The described techniques allow for verifying that a payment will be sent to an address associated with a specific public key (preventing MITM and other attacks), but they cannot guarantee that a public key is associated with a specific user. A way to overcome this limitation is to verify a public key using external authentication services, such as Paymail. Details on this technique are given below.

## Payment addresses

Once a permanent or semi-permanent address is linked to an identity using a certificate, self-certifying address or is provided by a Paymail service, this "main" address can be used to generate linked address used to receive payments. These payment addresses can be generated using hierarchical deterministic wallets, where the master node is the permanent or semi-permanent address and the derived keys are used as payment addresses following the rules and specifications of BIP32.

Alternatively, new public keys can be generated using messages related to the payment. In this case a new public key can be generated as:

$$new\_pub\_key = main\_pub\_key + SHA256(m) \times G$$

The message m can be anything related to the payment or anything else. G is the base point of the elliptic curve.

The private key associated with the new public key can be computed as:

$$new\_pr\_key = main\_pr\_key + SHA256(m)$$

As for any other application, a new public key should preferably be generated for any new payment received.

**QUIC Transactions**

The following section describes the procedure for a client Alice (e.g., a user) to send a payment directly to a recipient Bob (willing to receive a payment) using a QUIC transaction. The payment flow can be initialized by the sender or the receiver, we here discuss both the scenarios.

In the first case, the sender Alice 103a contacts the receiver Bob 103b communicating the amount it wishes to pay. Bob's wallet software will create a new public key and send to Alice 103a a BIP 270 request payment template. The sender Alice 103a will then pay the payment request by building, signing and sending a transaction to the public key specified in the payment request. An example process can be described as follows:

1. The client Alice 103a (the sender) contacts the recipient Bob 103b and checks that it accepts payments using QUIC.

- If QUIC is not supported by the recipient, the process is interrupted, and another payment method should be chosen.

2. The client Alice 103a sends a HTTP request over QUIC specifying its source connection ID (and optionally authenticating itself). During the handshake, packets with long header are used to establish the source and destination connection IDs that each endpoint uses (each endpoint specifies in its source connection ID field the ID that must be used in the destination connection ID field of the other peer).

3. The receiver Bob 103b populates its source connection ID field with an identifier (e.g., using a key linked trusted certificate or a CGA to self-certify) and includes in the payload a BIP270 payment request template with a new bitcoin public key linked to its main public key.

4. The client Alice 103a verifies the identity of the receiver (using one of the methods described above), populates the payment template paying to the provided bitcoin address (received in the payload of the message received from Bob 103b) and sends the payment template to the receiver Bob 103b using the QUIC channel.

5. The receiver Bob 103b collects the payment template and submits the transaction to the blockchain 150.

6. Optionally Bob 103b responds to Alice 103a acknowledging the reception of the signed payment template.

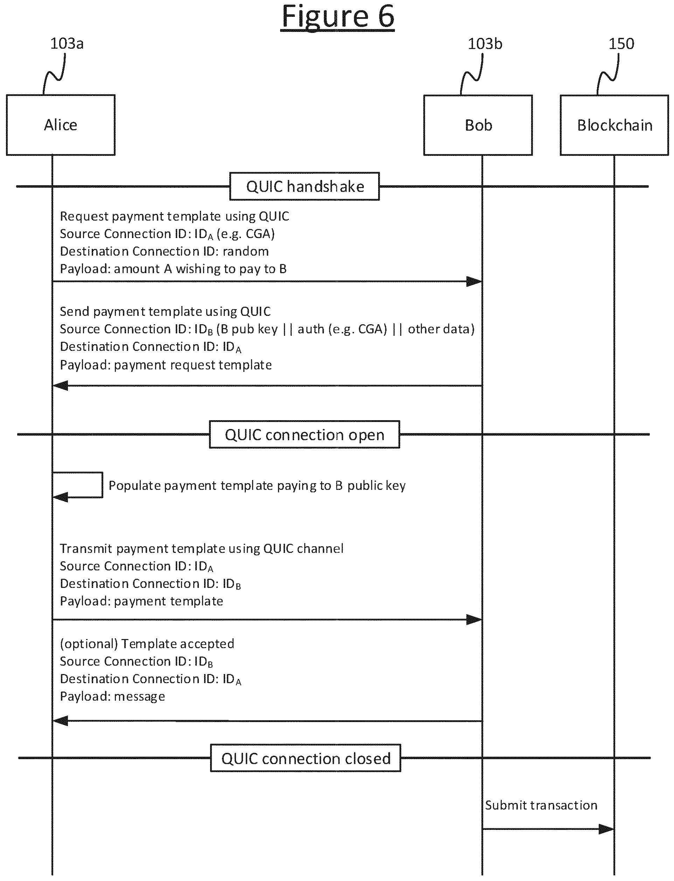

A diagram of a QUIC transaction initiated by the sender Alice 103a is shown in Figure 6.

In the second case, the receiver Bob 103b sends a payment request to the sender Alice 103a. Bob's wallet software will create a BIP270 payment request template specifying a new public key and the amount to be paid. The sender Alice 103a will then pay the payment request by building, signing and sending a transaction to the public key specified in the payment request. An example process can be described as follows:

1. The recipient Bob 103b contacts the sender Alice 103a and checks that it can send payments using QUIC.

- If QUIC is not supported by the sender, the process is interrupted, and another payment method should be chosen.

2. The recipient Bob 103b sends a HTTP request over QUIC. Bob 103b fills its source connection ID identifying itself (e.g., using a key linked to a trusted certificate or using CGA) and includes in the payload the BIP270 payment request template with a new bitcoin public key linked to its main public key. During the handshake, packets with long headers are used to establish the source and destination connection IDs that each endpoint uses (each endpoint specifies in its source connection ID field the ID that must be used in the destination connection ID field of the other peer).

3. The sender Alice 103a verifies the identity of the receiver Bob 103b. Then it chooses its source connection ID (it could be random or using CGA to self-certify) and responds to Bob 103b completing the handshake.

4. The client Alice 103a populates the payment template paying to the provided bitcoin address (received in the payload of the message received from Bob 103b) and sends the payment template to the receiver B using the QUIC channel.

5. The receiver Bob 103b collects the payment template and submits the transaction to the blockchain.

6. Optionally Bob 103b responds to Alice 103a acknowledging the reception of the signed payment template.

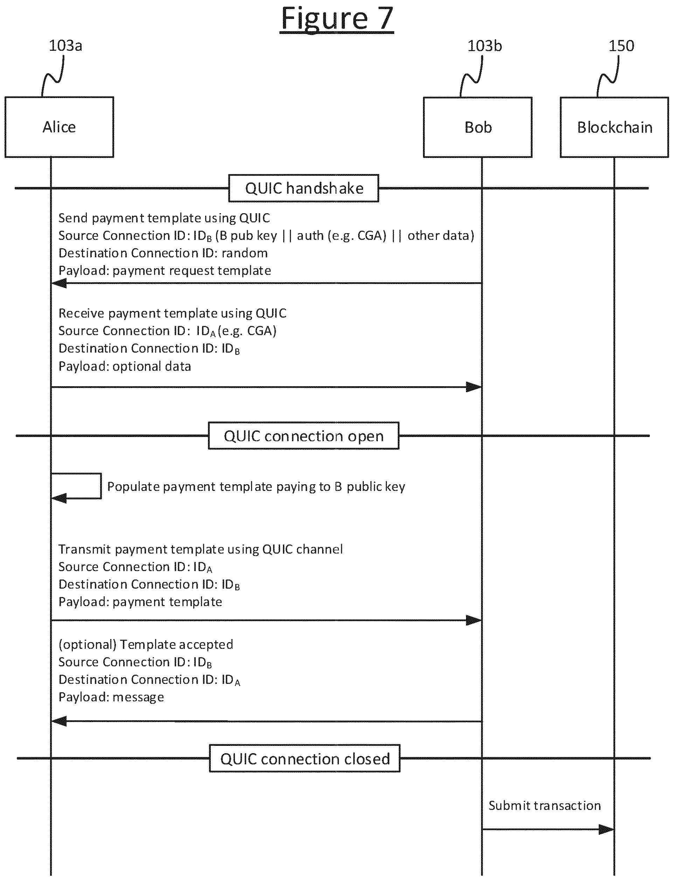

A diagram of a QUIC transaction initiated by the recipient Bob 103b is shown in Figure 7.
It is worth noting that the size of a bitcoin address is composed of the following fields: <version_byte><20 bytes of RIPEMD-160(SHA-256(PublicKey))><4 bytes checksum> for a total size of 25 bytes. The maximum size of a connection ID is currently 255 bytes. If required, the size of the address can be reduced using one of the following options:

1. Only the public key is used as connection ID, in the form of RIPEMD-160(SHA-256(PublicKey)). The version byte and the checksum can be optionally included the payload field.
2. The bitcoin address is included entirely in the payload field, and another connection ID is chosen.

## QUIC Embedded Transactions

The previous section described how a bitcoin address can be exchanged using a QUIC transaction. In fact, the entire transaction can be embedded in the connection ID field. A simple transaction is around 250 bytes and so can be entirely used as a connection ID. This solution can be an alternative to the QUIC transactions proposed in the previous section, enabling to send a payment simply opening a QUIC connection (only the handshake is required).
The process is similar to a QUIC transaction, but it is especially useful when a user, like an online shop or a service provider, directly requests a payment from another user (as opposed to a user which requests an address and then sends the payment). The process to request and receive a payment is composed of the following steps, assuming a user Alice 103a is willing to pay a user Bob 103b and Bob 103b initiates the communication sending a payment request. An example process can be described as follows:

1. The receiver Bob 103b checks if the client uses the QUIC protocol (blockchain version without limits on the size of the connection ID).

- If QUIC is not supported by the peer Alice 130a, the process is interrupted and another payment method is chosen.

2. The receiver Bob 103b sends a payment request to the peer Alice 103a:

- A QUIC connection is opened by the receiver Bob 103b.
- The receiver Bob 103b chooses its source connection ID comprising the public key where the payment should be sent and the amount to be paid. To prove its identity other information can be added, such as a CGA. Other optional parameters can be added, such as a description or an identification code.
- The destination connection ID is temporarily chosen randomly (like in a standard QUIC handshake).
- The message is sent to Alice 103a.

3. The client Alice 103a willing to pay responds using as source connection ID the bitcoin transaction:

- The payment information (e.g., public key, amount) is retrieved from the source connection ID received from Bob 103b. The Source Connection ID of Bob 103b is now the destination connection ID for Alice 103a.

- Peer Alice 103a verifies the identity of the receiver Bob 103b, checking the information included in the source connection ID of Bob 103b.

- ∘ If the identity cannot be verified, stop the process.

- • The user Alice 103a, willing to pay, creates a bitcoin transaction transferring the amount specified to the public key indicated. This transaction is used as source connection ID for peer Alice 103a.

4. The receiver Bob 103b receives the packet from the peer Alice 103a, reads the source connection ID, extracts the bitcoin transaction, and submits it on-chain.

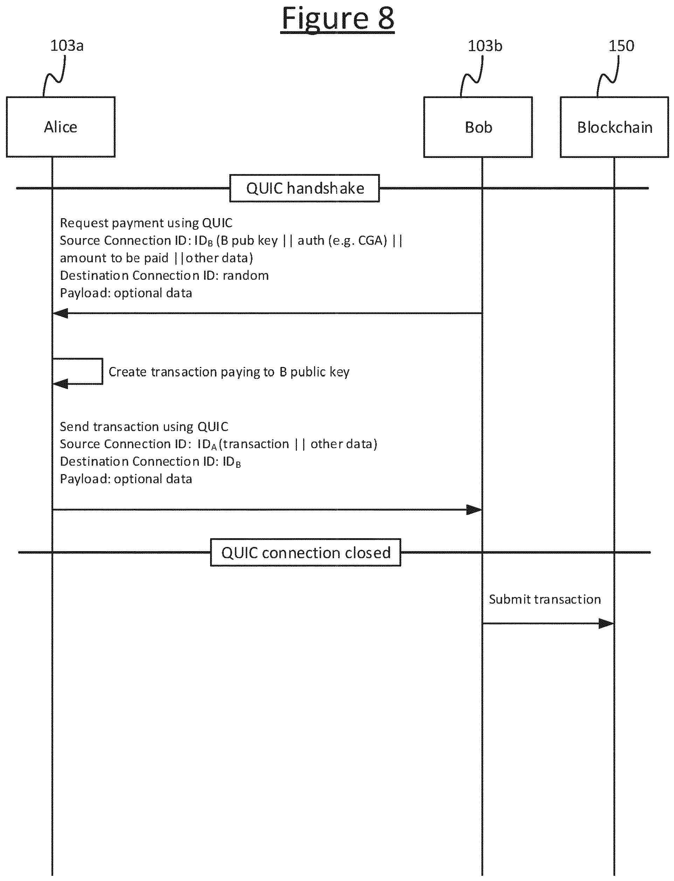

A diagram of a QUIC embedded transaction is shown in Figure 8**Error! Reference source not found..**

QUIC embedded transactions are the quickest way to receive a payment because the QUIC handshake is used to exchange payment details and transfer the bitcoins, so no further communication is required.

**QUIC Channels**

Payment channels allow for making multiple user-to-user bitcoin transactions without registering all the transactions to the blockchain. A new form of payment channels disclosed herein, hereafter called QUIC channels, integrate the benefits of current payment channels with QUIC features. QUIC channels use the same technique used in payment channels to update transactions and exchange information. A funding transaction (referred to above as an initial transaction) can be created using a QUIC transaction or a QUIC embedded transaction, where all the participants may include a CGA address or another form of authentication.

This opened QUIC session can be used to directly send and/or receive some content (e.g. streams of data), but with additional features. A QUIC session, in fact, automatically guarantees authentication of the peers and encryption of the content, so any bitcoin transaction exchanged using this channel inherits these properties. Moreover, as the session channel remains open even if the network (and the IP address) changes, the exchange of transactions is very quick and efficient, even on mobile devices (there is no need to reestablish a TCP connection to transmit an updated bitcoin transaction). For example, a client continuously updates the transaction increasing the amount paid to a movie provider, and the provider continues to stream a movie using a QUIC channel. This process does not require any interaction with the bitcoin network, except for the funding and refunding transactions. When the client or the provider wants to stop the streaming, it closes the QUIC connection. When the QUIC connection is closed the last agreed transaction is recorded on the blockchain.

A QUIC channel can be closed when a QUIC connection is closed (like in the previous example). Alternatively, the two peers can pause a QUIC channel by closing the QUIC connection without claiming the latest agreed transaction. A QUIC channel can be later resumed by re-initializing a QUIC connection using as connection IDs the same used in the previous connection. At any time one of the peers can claim the latest agreed transaction, closing the QUIC channel. The possibility to always close a QUIC channel by recording the latest agreed transactions prevents cheating attempts (e.g. if a peer records an older, more favourable transaction, the other can immediately record the latest agreed and claim the due value after locktime).

QUIC channels can use QUIC streams: streams provide a lightweight, ordered byte-stream abstraction to an application. A single bidirectional stream frame can open, carry data, update transactions, and close a stream.

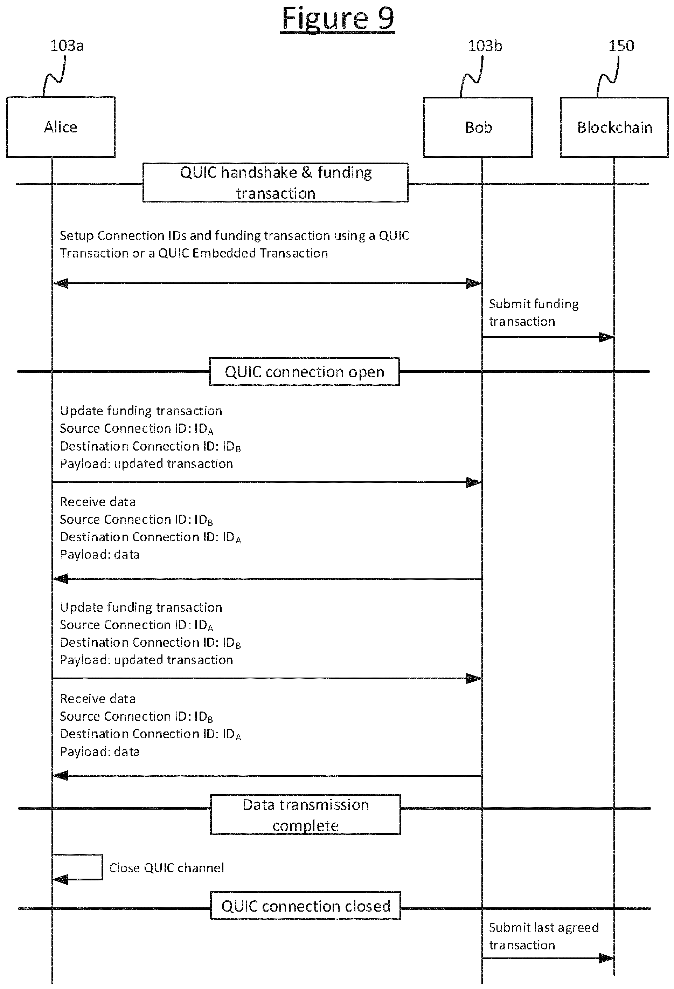

The process to open a QUIC channel is similar to the ones described in the previous sections. A diagram with an example of a QUIC channel flow is shown in Figure 9.

**Integration with Paymail**

Paymail (see https://bsvalias.org/) is an identity protocol that replaces bitcoin hexadecimal addresses, using human-readable names called *paymail addresses.* Paymail includes methods for service discovery, public key infrastructure and basic address resolution, providing user authentication and allowing direct exchange of BSV tokens.

The paymail payment flow is as follows: the sender uses the Service Discovery process to lookup the responsible paymail service of the receiver paymail address, it then contacts this paymail service to discover the preferred public key associated with the paymail address of the receiver. The payment can then be completed.

Paymail uses a REST API to convert paymail addresses into bitcoin public keys and provide all the other associated services. As a new public key is generated each time (usually using a HD derivation path), this key can be used as unique identifier and therefore also as connection ID for QUIC connections, with the advantage that this public key is intrinsically associated with the respective paymail identity. Paymail and QUIC may be integrated such the connection IDs required to open a QUIC channel are provided by the paymail services of the users (this uniquely authenticates both the users). For example, a user, that knows its paymail address (which is always the same), can request a new public key (which is always a new one) to its paymail provider and use it as connection ID for initializing a new QUIC channel with another user. Similarly, the user can verify the identity of the other user by checking if the connection ID belongs to a paymail address associated with that user (i.e. using the "Verify Public Key Owner" service provided by Paymail).

**Types of Payment**

Paymail is designed for interaction between users, using API to resolve addresses and so on. This interaction using HTTP protocol introduces a lot of latency which is usually not relevant for human users, but it can be significant for machine-to-machine interactions. Moreover, machines do not benefit from the usage of human-readable addresses. Therefore the use of paymail may depend on the type of entity that is sending the payment, e.g.:

- *User-to-user* or *user-to-machine* payments: they use paymail for simple payments (e.g. paying for a coffee) and paymail authentication with QUIC channels for continuous micropayments (e.g. video streaming).
- *Machine-to-machine* payments: they use IP-to-IP or QUIC-to-QUIC for simple payments (e.g. transfer of a good) and QUIC channels for continuous micropayments (e.g. autonomous electric car recharge).

**Example Use-Cases of QUIC Transactions and QUIC Channels**

Apart from integration with Paymail services, QUIC transactions and QUIC channels have several other use cases, especially in enabling micro-transactions for web services. QUIC has already been adopted by many major web sites, including Google, YouTube and Facebook, these services could easily extend their services offering premium content on-demand using QUIC channels. Thanks to QUIC channels micro-payments would be easy to implement and manage, examples of premium content may include video and audio streaming, access to news, services and gaming. Another use case is to integrate QUIC payments and QUIC channels in mvfst, the client and server implementation of QUIC by Facebook available open-source. An integration with such a set of libraries would enable any company already or willing to use that implementation to have also access to micro-transaction on the blockchain.

CONCLUSION

Other variants or use cases of the disclosed techniques may become apparent to the person skilled in the art once given the disclosure herein. The scope of the disclosure is not limited by the described embodiments but only by the accompanying claims.
For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.
In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).
In non-preferred embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.
Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.
It will be appreciated that the above embodiments have been described by way of example only. The invention is defined by the appended claims.

**Claims**

1. A computer-implemented method of sharing blockchain transactions, wherein the method is performed by a first party (103a) and comprises:

   receiving, from a second party (103b) over a QUIC connection, an incoming QUIC handshake message, wherein the incoming QUIC handshake message comprises a payment destination, wherein the payment destination comprises a public key and/or a public-key-based address; and
   sending a transaction to the second party (103b) over the QUIC connection, wherein the transaction comprises an output locked to the payment destination.

2. The method of claim 1, wherein the incoming QUIC handshake message comprises a payload field, and wherein the payload field comprises the payment destination.

3. The method of claim 2, wherein the payload field comprises a transaction template, and wherein the transaction is generated based on the transaction template, wherein the transaction template comprises the payment destination.

4. The method of any preceding claim, comprising sending a payment destination request for the payment destination to the second party (103b) over the QUIC connection.

5. The method of claim 4, wherein sending the payment destination request comprises:
   sending an outgoing QUIC handshake message to the second party (103b), wherein the outgoing QUIC handshake message comprises the payment destination request, wherein the outgoing QUIC handshake message comprises a source connection ID field, and wherein the source connection ID field comprises the payment request.

6. The method of claim 5, wherein the outgoing QUIC handshake message comprises a source connection ID field, and wherein the source connection ID field comprises an identifier linked to the first party (103a).

7. The method of claim 2 or any claim dependent thereon, wherein the incoming QUIC handshake message comprises a source connection ID field, and wherein sending the transaction to the second party (103b) over the QUIC connection comprises sending an outgoing QUIC message to the second party (103b), wherein the outgoing QUIC message comprises i) a destination connection ID field corresponding to the source connection ID field of the incoming QUIC handshake message, and ii) a payload field comprising the transaction.

8. The method of claim 2, wherein sending the transaction over the QUIC connection comprises:
   sending an outgoing handshake message to the second party (103b), wherein the outgoing handshake message comprises the transaction.

9. The method of claim 8, wherein the outgoing QUIC handshake message comprises a source connection ID field, and wherein the source connection ID field comprises the transaction, or wherein the outgoing QUIC handshake message comprises a payload field, and wherein the payload field comprises the transaction.

10. The method of any preceding claim, wherein the transaction is an initial transaction for a payment channel, and wherein the method comprises:
    sending one or more updated versions of the initial transaction to the second party (103b) over the QUIC connection, wherein each updated version of the initial transaction is sent using a respective QUIC message.

11. The method of claim 10, comprising receiving one or more payment update requests from the second party (103b), wherein each payment update request is sent to the first party (103a) using a respective QUIC message, and wherein each updated version of the initial transaction is sent to the second party (103b) in response to receiving a respective payment update request.

12. The method of claim 10 or claim 11, comprising:
    in response to the QUIC connection being terminated, sending a latest one of the one or more updated versions of the initial transaction to one or more blockchain nodes of a blockchain network (106).

13. A computer-implemented method of sharing blockchain transactions, wherein the method is performed by a second party (103b) and comprises:

sending, to a first party (103a) over a QUIC connection, an outgoing QUIC handshake message, wherein the outgoing QUIC handshake message comprises a payment destination;
receiving a transaction from the first party (103a) over the QUIC connection, wherein the transaction comprises the payment destination, wherein the payment destination comprises a public key and/or a public-key-based address; and
sending the transaction to one or more blockchain nodes of a blockchain network (106).

14. Computer equipment comprising:

memory comprising one or more memory units; and
processing apparatus comprising one or more processing units, wherein the memory stores code arranged to run on the processing apparatus, the code being configured so as when on the processing apparatus to perform the method of any of claims 1 to 13.

15. A computer program embodied on computer-readable storage and configured so as, when run on one or more processors, to perform the method of any of claims 1 to 13.

**Patentansprüche**

1. Computerimplementiertes Verfahren zum Teilen von Blockchain-Transaktionen, wobei das Verfahren durch eine erste Partei (103a) durchgeführt wird und umfasst:

Empfangen, von einer zweiten Partei (103b) über eine QUIC-Verbindung, einer eingehenden QUIC-Handshake-Nachricht, wobei die eingehende QUIC-Handshake-Nachricht ein Zahlungsziel umfasst, wobei das Zahlungsziel einen öffentlichen Schlüssel und/oder eine auf einem öffentlichen Schlüssel basierende Adresse umfasst; und
Senden einer Transaktion an die zweite Partei (103b) über die QUIC-Verbindung, wobei die Transaktion eine Ausgabe umfasst, die an das Zahlungsziel gebunden ist.

2. Verfahren nach Anspruch 1, wobei die eingehende QUIC-Handshake-Nachricht ein Nutzdatenfeld umfasst und wobei das Nutzdatenfeld das Zahlungsziel umfasst.

3. Verfahren nach Anspruch 2, wobei das Nutzdatenfeld eine Transaktionsvorlage umfasst und wobei die Transaktion basierend auf der Transaktionsvorlage erzeugt wird, wobei die Transaktionsvorlage das Zahlungsziel umfasst.

4. Verfahren nach einem der vorhergehenden Ansprüche, umfassend ein Senden einer Zahlungszielanforderung für das Zahlungsziel an die zweite Partei (103b) über die QUIC-Verbindung.

5. Verfahren nach Anspruch 4, wobei das Senden der Zahlungszielanforderung umfasst:
Senden einer ausgehenden QUIC-Handshake-Nachricht an die zweite Partei (103b), wobei die ausgehende QUIC-Handshake-Nachricht die Zahlungszielanforderung umfasst, wobei die ausgehende QUIC-Handshake-Nachricht ein Quellverbindungs-ID-Feld umfasst und wobei das Quellverbindungs-ID-Feld die Zahlungsanforderung umfasst.

6. Verfahren nach Anspruch 5, wobei die ausgehende QUIC-Handshake-Nachricht ein Quellverbindungs-ID-Feld umfasst und wobei das Quellverbindungs-ID-Feld eine Kennung umfasst, die mit der ersten Partei (103a) verknüpft ist.

7. Verfahren nach Anspruch 2 oder einem davon abhängigen Anspruch, wobei die eingehende QUIC-Handshake-Nachricht ein Quellverbindungs-ID-Feld umfasst und wobei das Senden der Transaktion an die zweite Partei (103b) über die QUIC-Verbindung ein Senden einer ausgehenden QUIC-Nachricht an die zweite Partei (103b) umfasst, wobei die ausgehende QUIC-Nachricht i) ein Zielverbindungs-ID-Feld, das dem Quellverbindungs-ID-Feld der eingehenden QUIC-Handshake-Nachricht entspricht, und ii) ein Nutzdatenfeld, das die Transaktion umfasst, umfasst.

8. Verfahren nach Anspruch 2, wobei das Senden der Transaktion über die QUIC-Verbindung umfasst:
Senden einer ausgehenden Handshake-Nachricht an die zweite Partei (103b), wobei die ausgehende Handshake-Nachricht die Transaktion umfasst.

9. Verfahren nach Anspruch 8, wobei die ausgehende QUIC-Handshake-Nachricht ein Quellverbindungs-ID-Feld umfasst und wobei das Quellverbindungs-ID-Feld die Transaktion umfasst oder wobei die ausgehende QUIC-Handshake-Nachricht ein Nutzdatenfeld umfasst und wobei das Nutzdatenfeld die Transaktion umfasst.

10. Verfahren nach einem der vorhergehenden Ansprüche, wobei die Transaktion eine anfängliche Transaktion für einen Zahlungskanal ist und wobei das Verfahren umfasst: Senden einer aktualisierten oder mehrerer aktualisierter Version(en) der anfänglichen Transaktion an die zweite Partei (103b) über die QUIC-Verbindung, wobei jede aktualisierte Version der anfänglichen Transaktion unter Verwendung einer jeweiligen QUIC-Nachricht gesendet wird.

11. Verfahren nach Anspruch 10, umfassend ein Empfangen einer oder mehrerer Zahlungsaktualisierungsanforderung(en) von der zweiten Partei (103b), wobei jede Zahlungsaktualisierungsanforderung an die erste Partei (103a) unter Verwendung einer jeweiligen QUIC-Nachricht gesendet wird und wobei jede aktualisierte Version der anfänglichen Transaktion als Reaktion auf das Empfangen einer jeweiligen Zahlungsaktualisierungsanforderung an die zweite Partei (103b) gesendet wird.

12. Verfahren nach Anspruch 10 oder Anspruch 11, umfassend:
als Reaktion darauf, dass die QUIC-Verbindung beendet wird, Senden einer letzten der einen oder der mehreren aktualisierten Version(en) der anfänglichen Transaktion an einen oder mehrere Blockchain-Knoten eines Blockchain-Netzwerks (106).

13. Computerimplementiertes Verfahren zum Teilen von Blockchain-Transaktionen, wobei das Verfahren durch eine zweite Partei (103b) durchgeführt wird und umfasst:

Senden, an eine erste Partei (103a) über eine QUIC-Verbindung, einer ausgehenden QUIC-Handshake-Nachricht, wobei die ausgehende QUIC-Handshake-Nachricht ein Zahlungsziel umfasst;
Empfangen einer Transaktion von der ersten Partei (103a) über die QUIC-Verbindung, wobei die Transaktion das Zahlungsziel umfasst, wobei das Zahlungsziel einen öffentlichen Schlüssel und/oder eine auf einem öffentlichen Schlüssel basierende Adresse umfasst; und
Senden der Transaktion an einen oder mehrere Blockchain-Knoten eines Blockchain-Netzwerks (106).

14. Computerausrüstung, umfassend:

Speicher, umfassend eine oder mehrere Speichereinheit(en); und
eine Verarbeitungseinrichtung, umfassend eine oder mehrere Verarbeitungseinheit(en), wobei der Speicher Code speichert, der angeordnet ist, um auf der Verarbeitungseinrichtung ausgeführt zu werden, wobei der Code dazu ausgelegt ist, das Verfahren nach einem der Ansprüche 1 bis 13 durchzuführen, wenn er sich auf der Verarbeitungseinrichtung befindet.

15. Computerprogramm, das auf einer computerlesbaren Speicherung verkörpert und dazu ausgelegt ist, das Verfahren nach einem der Ansprüche 1 bis 13 durchzuführen, wenn es auf einem oder mehreren Prozessor(en) ausgeführt wird.

**Revendications**

1. Procédé mis en œuvre par ordinateur de partage de transactions par chaîne de blocs, dans lequel le procédé est réalisé par une première entité (103a) et comprend :

la réception, en provenance d'une seconde entité (103b), par le biais d'une connexion QUIC, d'un message de poignée de main QUIC entrant, dans lequel le message de poignée de main QUIC entrant comprend une destination de paiement, dans lequel la destination de paiement comprend une clef publique et/ou une adresse à base de clef publique ; et
l'envoi d'une transaction, à la seconde entité (103b), par le biais de la connexion QUIC, dans lequel la transaction comprend une sortie verrouillée sur la destination de paiement.

2. Procédé de la revendication 1, dans lequel le message de poignée de main QUIC entrant comprend un champ de charge utile, et dans lequel le champ de charge utile comprend la destination de paiement.

**3.** Procédé de la revendication 2, dans lequel le champ de charge utile comprend un modèle de transaction, et dans lequel la transaction est générée sur la base du modèle de transaction, dans lequel le modèle de transaction comprend la destination de paiement.

**4.** Procédé d'une quelconque revendication précédente, comprenant l'envoi d'une demande de destination de paiement, pour la destination de paiement, à la seconde entité (103b), par le biais de la connexion QUIC.

**5.** Procédé de la revendication 4, dans lequel l'envoi de la demande de destination de paiement comprend :
l'envoi d'un message de poignée de main QUIC sortant à la seconde entité (103b), dans lequel le message de poignée de main QUIC sortant comprend la demande de destination de paiement, dans lequel le message de poignée de main QUIC sortant comprend un champ d'ID de connexion source, et dans lequel le champ d'ID de connexion source comprend la demande de paiement.

**6.** Procédé de la revendication 5, dans lequel le message de poignée de main QUIC sortant comprend un champ d'ID de connexion source, et dans lequel le champ d'ID de connexion source comprend un identifiant lié à la première entité (103a).

**7.** Procédé de la revendication 2 ou d'une quelconque revendication dépendant de celle-ci, dans lequel le message de poignée de main QUIC entrant comprend un champ d'ID de connexion source, et dans lequel l'envoi de la transaction, à la seconde entité (103b), par le biais de la connexion QUIC, comprend l'envoi d'un message QUIC sortant à la seconde entité (103b), dans lequel le message QUIC sortant comprend i) un champ d'ID de connexion de destination correspondant au champ d'ID de connexion source du message de poignée de main QUIC entrant, et ii) un champ de charge utile comprenant la transaction.

**8.** Procédé de la revendication 2, dans lequel l'envoi de la transaction par le biais de la connexion QUIC comprend :
l'envoi d'un message de poignée de main sortant à la seconde entité (103b), dans lequel le message de poignée de main sortant comprend la transaction.

**9.** Procédé de la revendication 8, dans lequel le message de poignée de main QUIC sortant comprend un champ d'ID de connexion source, et dans lequel le champ d'ID de connexion source comprend la transaction, ou dans lequel le message de poignée de main QUIC sortant comprend un champ de charge utile, et dans lequel le champ de charge utile comprend la transaction.

**10.** Procédé d'une quelconque revendication précédente, dans lequel la transaction est une transaction initiale pour un canal de paiement, et dans lequel le procédé comprend :
l'envoi d'une ou de plusieurs versions mises à jour de la transaction initiale, à la seconde entité (103b), par le biais de la connexion QUIC, dans lequel chaque version mise à jour de la transaction initiale est envoyée en utilisant un message QUIC respectif.

**11.** Procédé de la revendication 10, comprenant la réception d'une ou de plusieurs demandes de mise à jour de paiement, en provenance de la seconde entité (103b), dans lequel chaque demande de mise à jour de paiement est envoyée à la première entité (103a) en utilisant un message QUIC respectif, et dans lequel chaque version mise à jour de la transaction initiale est envoyée à la seconde entité (103b) en réponse à la réception d'une demande de mise à jour de paiement respective.

**12.** Procédé de la revendication 10 ou de la revendication 11, comprenant :
en réponse au fait que la connexion QUIC est terminée, l'envoi d'une toute dernière de l'une ou des plusieurs versions mises à jour de la transaction initiale à un ou à plusieurs nœuds de chaîne de blocs d'un réseau de chaîne de blocs (106).

**13.** Procédé mis en œuvre par ordinateur de partage de transactions par chaîne de blocs, dans lequel le procédé est réalisé par une seconde entité (103b) et comprend :

l'envoi, à une première entité (103a), par le biais d'une connexion QUIC, d'un message de poignée de main QUIC sortant, dans lequel le message de poignée de main QUIC sortant comprend une destination de paiement ;
la réception d'une transaction, en provenance de la première entité (103a), par le biais de la connexion QUIC, dans lequel la transaction comprend la destination de paiement, dans lequel la destination de paiement comprend une clef publique et/ou une adresse à base de clef publique ; et

l'envoi de la transaction à un ou à plusieurs nœuds de chaîne de blocs d'un réseau de chaîne de blocs (106).

14. Équipement d'ordinateur, comprenant :

une mémoire comprenant une ou plusieurs unités de mémoire ; et
un appareil de traitement comprenant une ou plusieurs unités de traitement, dans lequel la mémoire stocke un code agencé pour être exécuté sur l'appareil de traitement, le code étant configuré afin, lorsqu'il est sur l'appareil de traitement, de réaliser le procédé de quelconques des revendications 1 à 13.

15. Programme d'ordinateur incorporé sur un élément de stockage lisible par ordinateur et configuré afin, lorsqu'il est exécuté sur un ou plusieurs processeurs, de réaliser le procédé de quelconques des revendications 1 à 13.

# Figure 1

# Figure 2

Transaction
from Alice to Bob

Validated by running: Locking
script from output 203 of $Tx_0$,
together with Alice's unlocking
script from input 202 of $Tx_1$. This
checks that Alice's unlocking script
in $Tx_1$ meets the condition(s)
defined in the locking script of
previous transaction $Tx_0$.

# Figure 3A

Client application — 105

UI layer — 402

Transaction engine — 401

403

# Figure 3B

Client app (Alice) — 500

503

502

501

EP 4 176 367 B1

# Figure 4

**HTTP Request Over TCP + TLS**

Client                          Server

TCP SYN

TCP SYN + ACK

TCP ACK

TLS ClientHello

TLS ServerHello

TLS Finished

HTTP Request

HTTP Response

**HTTP Request Over QUIC**

Client                          Server

QUIC

QUIC

QUIC

HTTP Request

HTTP Response

29

# Figure 5

# Figure 6

103a                                                    103b              150

| Alice |                                              | Bob |   | Blockchain |

QUIC handshake

Request payment template using QUIC
Source Connection ID: $ID_A$ (e.g. CGA)
Destination Connection ID: random
Payload: amount A wishing to pay to B

Send payment template using QUIC
Source Connection ID: $ID_B$ (B pub key || auth (e.g. CGA) || other data)
Destination Connection ID: $ID_A$
Payload: payment request template

QUIC connection open

Populate payment template paying to B public key

Transmit payment template using QUIC channel
Source Connection ID: $ID_A$
Destination Connection ID: $ID_B$
Payload: payment template

(optional) Template accepted
Source Connection ID: $ID_B$
Destination Connection ID: $ID_A$
Payload: message

QUIC connection closed

Submit transaction

# Figure 7

103a

103b

150

Alice

Bob

Blockchain

QUIC handshake

Send payment template using QUIC
Source Connection ID: $ID_B$ (B pub key || auth (e.g. CGA) || other data)
Destination Connection ID: random
Payload: payment request template

Receive payment template using QUIC
Source Connection ID: $ID_A$ (e.g. CGA)
Destination Connection ID: $ID_B$
Payload: optional data

QUIC connection open

Populate payment template paying to B public key

Transmit payment template using QUIC channel
Source Connection ID: $ID_A$
Destination Connection ID: $ID_B$
Payload: payment template

(optional) Template accepted
Source Connection ID: $ID_B$
Destination Connection ID: $ID_A$
Payload: message

QUIC connection closed

Submit transaction

# Figure 8

103a          103b       150

| Alice | Bob | Blockchain |

QUIC handshake

Request payment using QUIC
Source Connection ID: $ID_B$ (B pub key || auth (e.g. CGA) ||
amount to be paid ||other data)
Destination Connection ID: random
Payload: optional data

Create transaction paying to B public key

Send transaction using QUIC
Source Connection ID: $ID_A$ (transaction || other data)
Destination Connection ID: $ID_B$
Payload: optional data

QUIC connection closed

Submit transaction

# Figure 9

**103a** Alice

**103b** Bob

**150** Blockchain

QUIC handshake & funding transaction

Setup Connection IDs and funding transaction using a QUIC Transaction or a QUIC Embedded Transaction

Submit funding transaction

QUIC connection open

Update funding transaction
Source Connection ID: $ID_A$
Destination Connection ID: $ID_B$
Payload: updated transaction

Receive data
Source Connection ID: $ID_B$
Destination Connection ID: $ID_A$
Payload: data

Update funding transaction
Source Connection ID: $ID_A$
Destination Connection ID: $ID_B$
Payload: updated transaction

Receive data
Source Connection ID: $ID_B$
Destination Connection ID: $ID_A$
Payload: data

Data transmission complete

Close QUIC channel

QUIC connection closed

Submit last agreed transaction

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190311337 A1
- US 2020151716 A1